Europäisches Patentamt

European Patent Office

Office européen des brevets

(19)

(11) Publication number : **0 505 087 A2**

(12) # EUROPEAN PATENT APPLICATION

(21) Application number : **92302114.1**

(22) Date of filing : **12.03.92**

(51) Int. Cl.⁵ : **G06F 15/32**

(30) Priority : **20.03.91 JP 57095/91**

(43) Date of publication of application :
**23.09.92 Bulletin 92/39**

(84) Designated Contracting States :
**DE FR GB**

(71) Applicant : **HITACHI, LTD.**
**6, Kanda Surugadai 4-chome**
**Chiyoda-ku, Tokyo 101 (JP)**

(72) Inventor : **Kumahora, Hiroki**
**15-3-2 Suwa-cho, 4-chome**
**Hitachi-shi, Ibaraki 316 (JP)**
Inventor : **Tago, Kazutami**
**D301 3-14 Higahitaga-cho**
**Hitachi-shi, Ibaraki 316 (JP)**
Inventor : **Kobayashi, Kinya**
**25-46 Kuji-cho 2-chome**
**Hitachi-shi, Ibaraki 319-12 (JP)**
Inventor : **Kurita, Noriyuki**
**B210 12-1 Ayukawa-cho 6-chome**
**Hitachi-shi, Ibaraki 316 (JP)**

(74) Representative : **Calderbank, Thomas Roger et al**
**MEWBURN ELLIS 2 Cursitor Street**
**London EC4A 1BQ (GB)**

(54) **Method for solving a non linear problem by iteration.**

(57)  In order to solve a non-linear problem, an iteration method is used in which, in each iteration step (11), a prediction result of the non-linear is solved by a plurality of prediction methods (15), to obtain a plurality of parallel predicted solutions. Then the optimum one of those predicted solutions is selected (16) and the corresponding prediction result is then the prediction result used in the next iteration step (11). Thus, at each iteration step, the optimum method is used from a plurality of prediction methods. Hence, the predicted solutions converge rapidly to a final solution. The optimum solution is determined by comparing the predicted solution of each prediction method with the prediction result of the previous iteration, e.g. on the basis of difference, absolute difference, or ratio.

FIG.3

EP 0 505 087 A2

The present invention relates to a method of obtaining a final solution to a non-linear problem, by iteration. It also relates to a method of analysis of a property of material, using the method of solving the non-linear problem, to a method of analysis for property of a fluid, and to a method of analysing an electromagnetic field.

With the development of computer technology, numerical analysis such as large scale molecular orbital analysis has been made possible. Consequently, molecular design assistance apparatus using molecular orbital analysis technology has been proposed. Such molecular orbital analysis needs to solve the Schroedinger equation which is the basic equation for numerical analysis of molecular orbits. In most cases, the problem of solving the basic equation numerically results in a non-linear eigenvalue problem. Thus the performance of the molecular design assistance apparatus largely depends on the numerical solution of a non-linear eigenvalue problem.

A non-linear eigenvalue problem is a problem in which an eigenvector and eigenvalue are obtained which is a solution satisfying the basic equation while the basic expression is expressed with a matrix called the eigenvalue matrix. In molecular orbit analysis with a molecular design assistance apparatus, the eigenvalue matrix indicates an interaction among multiple electrons moving in designed molecule, the eigenvector indicates the orbit of electron moving in the designed molecule and the eigenvalue indicates the orbit energy of electron moving in the designed molecule. Because the above mentioned eigenvalue matrix is a function of the eigenvector, it is necessary to create an eigenvalue and calculate an eigenvector so that there is no contradiction therebetween. The eigenvalue problem in which an eigenvalue matrix is a function of an eigenvector or eigenvalue is called a non-linear eigenvalue problem. Usually, in non-linear eigenvalue problems, an initial value of the eigenvector is assumed and an eigenvalue matrix is created. Next, the eigenvalue matrix is solved to calculate a new eigenvector and eigenvalue. Then, a new eigenvalue matrix is created on the basis of the new eigenvector and the new eigenvalue matrix is solved to calculate further eigenvectors and eigenvalues. Executing convergent calculations of the eigenvector and eigenvalue by repeated operations enables a calculation without contradiction.

Because an eigenvalue matrix which is usually handled by the molecular design assistance apparatus is a very large scale matrix, the time required for calculation thereof is tremendous. For example, a eigenvalue matrix handled in molecular orbital analysis is required to express the interactions among all the electrons moving in a designed molecule. Thus the size of an eigenvalue matrix is proportional to the square of the number of electrons moving in the designed molecule. For this reason, even when designing a small molecule having about 100 electrons, a large scale matrix calculation of 100 lines x 100 columns is required to obtain the size of the required eigenvalue matrix. Such matrix calculation requires a great amount of time.

The eigenvalue matrix is of the size necessary to express the interactions among all electrons moving in a molecular design object and the size of the matrix cannot be reduced. Thus, it is difficult to reduce the calculation time required for a single calculation to obtain the eigenvalue matrix. Thus, increased calculation speed by reducing the repeat time of calculations about non-linear eigenvalue problem determines the performance of a design assistance apparatus.

When solving a eigenvalue matrix for high-speed calculation of non-linear eigenvalue problems, as described in e.g."Numeric Simulation in Engineering" (published by Maruzen) for example, the conventional molecular design assistance apparatus reduces the number of repeats of calculations by preparing a prediction method for eigenvector and eigenvalue.

However, there is currently no way of predicting accurately which of the many possible methods of obtaining the eigenvector and eigenvalue for every kind of eigenvalue matrix is appropriate. All such methods operate by iteratively repeating the calculation, but, for any given eigenvalue matrix, convergence of the iteration to a stage at which the difference between the solution obtained at one step of the iteration and the solution obtained at the next step of the iteration if sufficiently small may be slow. Indeed, some methods may never reach such convergence, and may oscillate between two solutions, neither of which is sufficiently close to the final solution to be used.

Therefore, the present invention proposes that, at each iteration stage, a plurality of methods are applied to obtain a plurality of parallel solutions. Then, an optimum one of those solutions is selected, and the result of that optimum predicted solution is used in the next iteration step by all the prediction methods.

Thus, the present invention makes use of the optimum solution in each iteration round, until one of the prediction methods produces a solution which has converged sufficiently. It may thus be seen that, when solving a particular problem, the optimum solution for some iteration steps may be obtained by a different method from that used to obtain the optimum solution of other steps. At any time, therefore, the method of the present invention selects the method which is most appropriate.

It may be noted that, when a converged solution has been obtained, the optimum solution derived in that iteration step will normally be used as the final solution, although it is possible (since the difference is small) to use the solution of the preceding iteration.

With the present invention, it is necessary to obtain parallel solutions but this does not necessarily mean that the prediction methods are themselves applied in parallel, although this normally represents a more rapid way of obtaining the parallel solutions.

There are several ways of selecting the optimum solution at each step. Normally, in any such method, the predicted results of each prediction method are compared with the optimum prediction result from the previous iteration, but there are several ways of carrying out this comparison. The simplest is to look at the difference, and select the smallest difference, but it is normally preferable to consider the absolute difference. A further alternative considers the ratio of that difference to the predicted solution of the previous iteration, and selects the solution which minimises that ratio.

With the present invention, for a given non-linear problem, only some solution methods may be appropriate. However, the present invention may store a multiplicity of possible solution methods, with the appropriate solution methods being selected according to the given non-linear problem.

The present invention is applicable to material analysis, particularly molecular orbital analysis, and may be used in design methods for investigating an object such as a molecule. It is also applicable, however, to fluid dynamics, investigation of electromagnetic fields, and other situations where there are non-linear problems solving by iteration methods.

Because the method of this invention obtains a predicted solution for each program using different prediction programs to predict a solution of the non-linear problem, an optimum solution can be selected from those predicted solutions at each iteration. This optimum predicted solution is then used for the next repeated operation, and so the number of repeated iterations is significantly reduced, so that the final solution to the non-linear problem can be obtained in a short time. Each prediction program is used for calculations of the same number of times as operations to solve the non-linear problem.

Embodiments of the present invention will now be described in detail, by way of example, with reference to the accompanying drawings, in which:

Fig. 1 is a block diagram illustrating the processing to be executed in a first embodiment of the present invention;

Fig. 2 shows a molecular design assistance apparatus using the first embodiment of this invention;

Fig. 3 shows in more detail part of the processing of the embodiments of Fig. 1;

Fig. 4 shows in more detail a further part of the processing in the embodiment of Fig. 1;

Fig. 5 illustrates the effects of the first embodiment;

Fig. 6 illustrates further features of first embodiment of Fig. 1;

Fig. 7 shows a detail of part of the processing of a molecular design assistance apparatus which is a second embodiment of this invention;

Fig. 8 shows a detail of part of the processing of a molecular design assistance apparatus which is a third embodiment of this invention;

Fig. 9 is a block diagram showing the processing to be executed in a design assistance apparatus which is a fourth embodiment of this invention; and

Fig. 10 illustrates functions of the processing of Fig. 9.

A molecular design assistance apparatus which is a first embodiment of this invention will now be described. The term "molecular design assistance apparatus" refers to an apparatus for assisting in the design of molecules to which is input the molecular structure or chemical formula of a molecule and which then evaluates the chemical characteristics of the molecule. The electron orbit energy and electron orbit are the basic physical quantities needed to evaluate the chemical characteristics, and these are obtained by solving the Schroedinger equation which is the basic equation. The analysis method to calculate electron orbits by solving the Schroedinger equation is called molecular orbital analysis. In order to obtain electron orbit energies and electron orbits it is necessary to set-up a non-linear eigenvalue problem to solve a non-linear eigenvalue matrix expressing the interactions between the electrons in numerical terms.

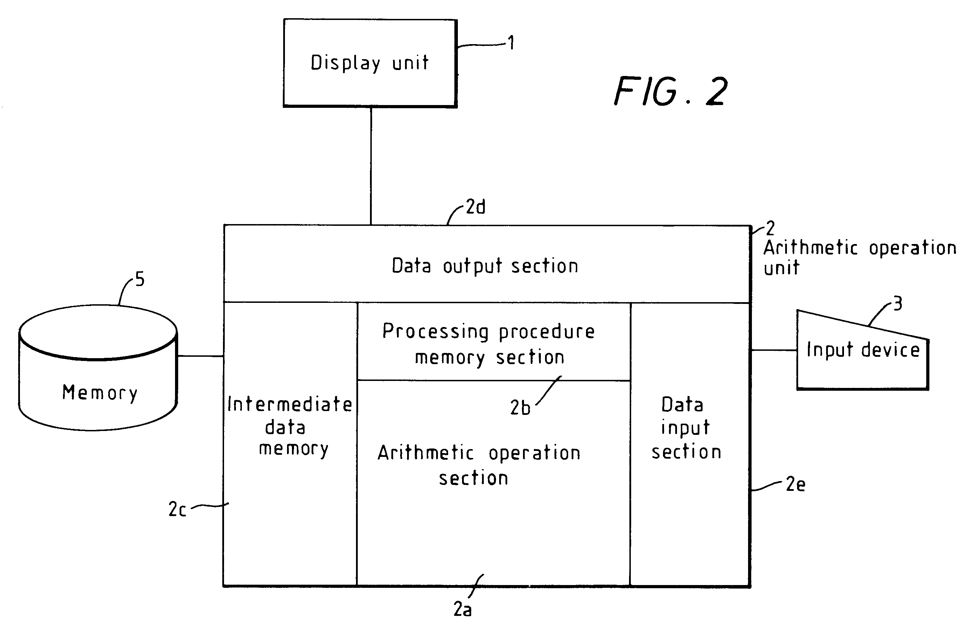

A molecular design assistance apparatus which is the first embodiment is shown in Fig. 2 comprises the display unit 1, an arithmetic operation unit 2, input device (for example, a keyboard), and a memory 5. The arithmetic operation unit 2 comprises an operating section 2a, a processing step memory 2b, an intermediate data memory 2c, a data output section 2d and an input section 2e. Data created by the arithmetic operation unit 2 is displayed on the display unit 1. The memory 5 stores multiple prediction programs (hereinafter also referred to as a prediction method) for solving the Schroedinger equation according to those different prediction methods. These prediction methods are used to predict solutions of the basic equation which is a non-linear equation.

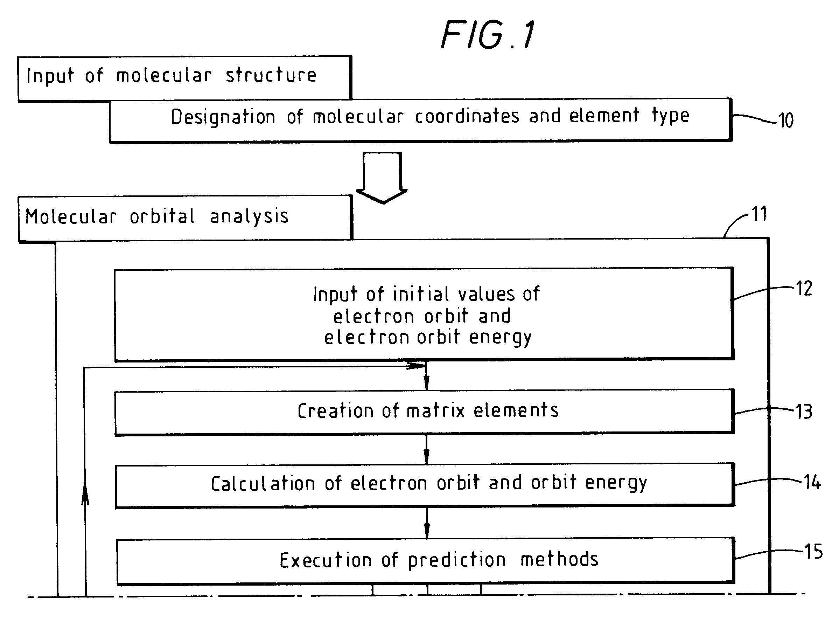

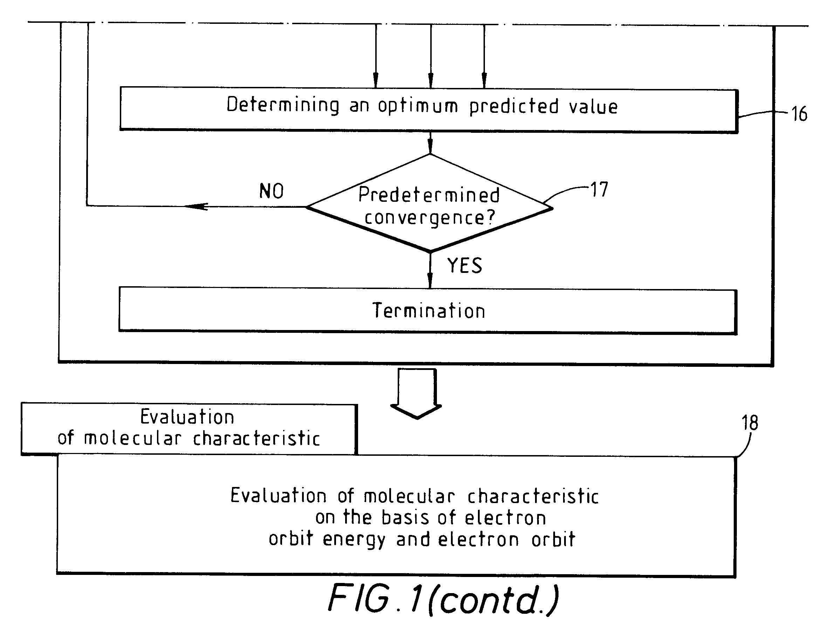

Fig. 1 shows the processing to be executed in the operating unit 2a of the molecular design assistance apparatus of the first embodiment. This processing is stored in the processing step memory 2b. When the procedure of the processing is executed at the operating section 2a, any data required is read from the memory 5 and stored in the intermediate data memory; temporarily, if necessary. Data temporarily stored in the intermediate data memory is also used in executing the processing procedure. The information (predicted solution) obtained by executing the processing procedure at the operating section 2a is stored in the intermediate data memory 2c and memory 5. The information obtained by executing the processing procedure may also be output to the display 1 from the data output section 2d and displayed.

Referring to the processing procedure shown in Fig. 1, the processing for molecular design assistance using the first embodiment will be explained step by step. At step 10, the molecular structure which is an object of molecular design is input. This is done by operator's inputting the data of molecular structure (chemical formula) of the object of molecular design through the input device 3. Molecular coordinates and data about elements contained in the molecule are included in this data. Input of molecular structure data at step 10 may be achieved by reading the molecular structure data which was entered via the input device 3 and stored in memory 5, into the operating section 2a. Each set of data is stored in the intermediate data memory 2c.

Next, molecular orbit analysis is performed at step 11. Step 11 includes steps 12 to 17 which are carried out iteratively and repeatedly until a final solution is obtained. This interaction operation will now be considered in detail.

An initial value necessary (initial prediction result) for solving the Schroedinger equation for a desired molecular structure is input by the operator via the input device (step 12). This initial value is the initial value of electron orbit energy or electron orbit against the desired molecular structure. Input of this initial value may be achieved by transferring an initial value stored in the memory 5 by the operator to the operating section 2a. This initial value is stored in the intermediate data memory 2c.

After the initial value is input, the processing of step 13 is executed. Step 13 involves creating a eigenvalue matrix based on the Schroedinger equation for a desired molecular structure. The eigenvalue matrix created at this step is a function associated with the molecular structure input at step 10 and the initial value of the electron orbital energy input at step 12.

For example, the eigenvalue matrix created at step 13 may be expressed by the HARTREE-FOCK method, which is a type of molecular orbit analysis described in "Molecular Principle and Calculation" (published by Kyoritsu), and therefore contains a FOCK matrix and an overlapping matrix. A FOCK matrix is a matrix indicating the size of interactions received by the electrons in the molecular structure input at step 10 and the overlapping matrix is the matrix indicating an overlapping of electron orbits whose initial values are input at step 12.

At step 14, the eigenvalue matrix created at step 13 is solved and then "electron orbit" which is an eigenvector and "electron orbit energy" which is an eigenvalue are calculated. The eigenvalue matrix created at step 13 is easy to solve by e.g. the Householder Givens method which is represented in "Application to supercomputer scientific technical calculation". The electron orbit and electron orbit energy obtained at the step 14 are hereinafter referred to as a simple solution. This simple solution is a solution of the Schroedinger equation for a desired molecular structure. The simple solution obtained is stored in the memory 5.

Prediction methods stored in the memory 5 are selected and executed against multiple simple solutions, and predicted solutions thus obtained are stored in the memory 5 (step 15). The predicted solutions are predicted values of the simple solution, obtained by applying the respective prediction methods. The processing procedure shown in Fig. 1 is an example of executing all the prediction methods stored. The total number of prediction methods stored in the memory 5 needs to be at least two or more.

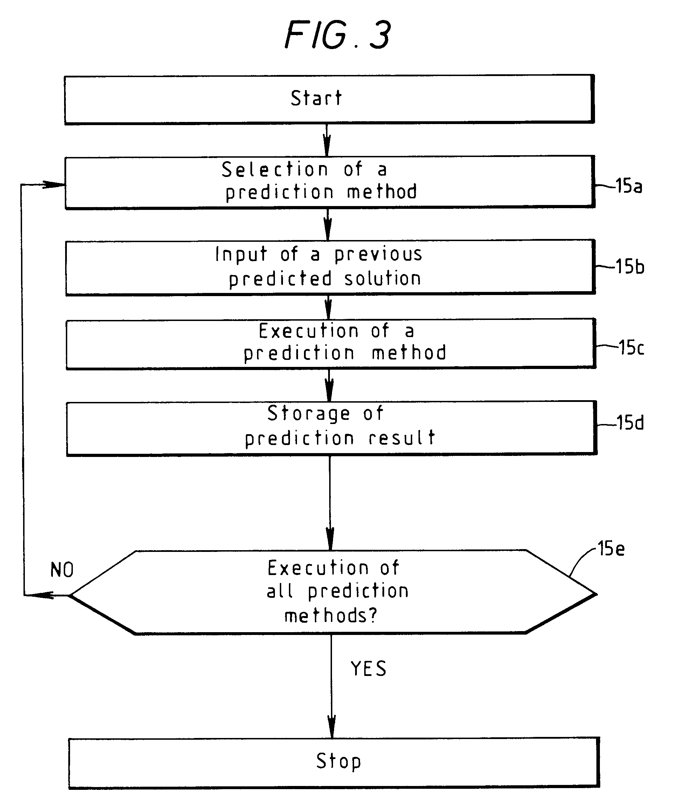

The detailed operation of step 15 is shown in Fig. 3. First, a prediction method is selected from the memory 5 at step 15a. An "optimum" predicted solution to an object molecular structure, obtained by the prediction method (prediction method selected at the step 15a) to be executed at the step 15c is retrieved from the memory 15 and input (step 15b). Initially, this "optimum" solution is simply an initial prediction result input e.g. by the operator. A corresponding simple solution is read from the memory 5. When obtaining a predicted solution by applying an appropriate prediction method to the desired molecular structure, each initial value set at step 12 is called from the intermediate data memory 2c. At step 15c, a predicted solution to the appropriate molecular structure is obtained using the prediction method selected at step 15a. The predicted solution obtained at step 15c is stored in the memory 5 (step 15d).

Then, the apparatus determines whether or not all the prediction methods stored in the memory 5 have been executed (step 15e). Unless execution of all the prediction methods is completed, the processing from the step 15a to the step 15d is repeated for the remaining prediction methods. In the first embodiment, because the prediction methods are stored in the memory 5, a first prediction method is selected at the step 15a and the processing of steps 15b to 15e is executed for this first prediction method. Then, a second prediction method is selected at step 15a and the processing of the steps 15b to 15e are executed for this second prediction method. When the execution of those two prediction methods are completed, (and assuming there are no other methods) step 15e judges "YES". At this time, processing at step 15 terminates, and operation proceeds to the next step 16. At step 15, a predicted solution can be obtained for each prediction method, using different prediction methods at a calculation repeated "n" times.

Thus, a plurality of predicted solutions are obtained in parallel. It should be noted that the present invention requires only that the predicted solutions are obtained in parallel, and the prediction methods may be carried out in series or in parallel. In the former case, which is easier to achieve by suitable programming, the predicted solutions need to be stored. Parallel processing is more rapid, but is more difficult to program, and may need a special computer.

There are many examples of the prediction methods which may be used in the processing of step 15c shown in Fig. 3. One prediction method is the relaxation method, and a second prediction method is of the method of least square.

Assume that the current repeat number is "n" and the simple solution obtained at step 14 is $X(n)$ at repeated calculations (the processing of the steps 13 to 16 is repeated until the step 17 judges "YES"). Where the prediction method refers to such a program to predict a predicted solution $Y(n+1)$ at the next repeat time $(n+1)$.

The prediction method using the relaxation method defines the predicted solution $Y1(n+1)$ by Formula 1 below.

Formula 1

$$Y1(n + 1) = aY1(n) + (1-a)X(n)$$

where "a" is relaxation parameter, representing the weight of the predicted solution $Y1(n)$ and simple solution $X(n)$. The predicted solution $Y1(n)$ is a predicted solution obtained by the calculation of the previous iteration $(n-1)$ (Formula 1). The simple solution $X(n)$ is a simple solution obtained at step 14 at a repeated calculation of the iteration repeat $(n)$.

A prediction method using the method of least square provides a predicted solution $Y2(n+1)$ by approximating from the simple solution $X(1)$ with a single repeat to $X(n)$ with n repeats, for example, by means of a quadratic equation.

Formula 2

$$Y2(n + 1) = a + b(n + 1) + c(n + 1)^2$$

where a, b and c are parameters of a quadratic equation, which can ce obtained from the matrix defined by Formula 3.

Formula 3

$$\begin{pmatrix} a \\ b \\ c \end{pmatrix} = \begin{pmatrix} \sum_{i=1}^{n} 1 & \sum_{i=1}^{n} i & \sum_{i=1}^{n} i^2 \\ \sum_{i=1}^{n} i & \sum_{i=1}^{n} i^2 & \sum_{i=1}^{n} i^3 \\ \sum_{i=1}^{n} i^2 & \sum_{i=1}^{n} i^3 & \sum_{i=1}^{n} i^4 \end{pmatrix}^{-1} \begin{pmatrix} \sum_{i=1}^{n} X(i) \\ \sum_{i=1}^{n} i X(i) \\ \sum_{i=1}^{n} i^2 X(i) \end{pmatrix}$$

Where $(\ )^{-1}$ represents an inverse matrix.

The above-mentioned multiple predicted solutions $Y1(n+1)$ and $Y2(n+1)$ are stored in the memory 5 at step 15d. The procedure of processing at step 15 is called the optimum solution prediction processing procedure. The prediction method to be used in the optimum solution prediction processing procedure is not limited. Even if other prediction method than those mentioned above are used, the same effect as the first embodiment can be secured.

Other prediction methods may be used with the present invention, in addition to those previously described. Listed below are four technical publications which discuss various known prediction methods which may be used.

1. Relevant discussion: Convergence of eigenvalues in the calculation of molecular orbit
Title: Modern Quantum Chemistry, p145-p149
Author: A. Szabo and N.S. Ostlund
Publishing company: Macmillan
Publishing year: 1982
2. Relevant discussion: Hartree-Fock method which is a type of molecular orbit analysis
Title: Modern Quantum Chemistry, p108-122
Author: A. Szabo and N.S. Ostlund
Publishing company: Mac millan
Publishing year: 1982
3. Relevant discussion: Density Functional Method, which is a type of molecular orbit analysis
Title: Ab Initio methods in Quantum Chemistry-1, p413-423
Author: K.P. Lawley
Publishing company: John Wiley & Sons
Publishing year: 1987
4. Relevant discussion: Eigenvalue analysis
Title: Modern quantum Chemistry, p15-p38
Author: A. Szabo and N.S. Ostlund
Publishing company: Macmillan
Publishing year: 1982

Publication 1 discusses computational procedures for obtaining restricted closed-shell Hartree-Fock wave functions for molecules. As mentioned above, it discusses the convergence of eigenvalues. Documents 2 and 3 described various prediction methods which are applicable to molecular analysis. Document 4 describes eigenvalue analysis.

Furthermore, the cook "Nonlinear Programming: Analysis and Methods" by M Avriel, published by Prentice Hall in 1976 discusses at pages 215 to 243 further prediction methods usable in the present invention. Four examples of such prediction methods are listed in Table 1.

Table 1

| No. | Name of the prediction method | Content |
|---|---|---|
| 1 | Newton's method | $Y1(n+1) = X(n) - \dfrac{X'(n)}{X''(n)}$, <br> where $X'(n)$ and $X''(n)$ are the first derivative and the second derivative at the repeat number "n", respectively. They can be obtained as follows, <br> $X'(n)=X(n)-X(n-1)$ <br> $X''(n)=X(n)-2 \times X(n-1)+X(n-2)$. |
| 2 | Secant method <br><br> (Second-order polynomial) | $Y2(n+1) = X(n) - \dfrac{X'(n)}{X'(n)-X'(n-1)}$, <br> where $X'(n)$ is the first derivative at the repeat number "n". $X'(n-1)$ is the first derivative at the repeat number "n-1". They can be obtained as follows, <br> $X'(n)=B+2 \times C \times n$ <br> $X'(n-1)=B+2 \times C \times (n-1)$. <br> Values B and C can be obtained as follows, <br><br> $\begin{pmatrix} A \\ B \\ C \end{pmatrix} = \begin{pmatrix} \sum\limits_{i=1}^{n} 1 & \sum\limits_{i=1}^{n} i & \sum\limits_{i=1}^{n} i^2 \\ \sum\limits_{i=1}^{n} i & \sum\limits_{i=1}^{n} i^2 & \sum\limits_{i=1}^{n} i^3 \\ \sum\limits_{i=1}^{n} i^2 & \sum\limits_{i=1}^{n} i^3 & \sum\limits_{i=1}^{n} i^4 \end{pmatrix}^{-1} \begin{pmatrix} \sum\limits_{i=1}^{n} X(i) \\ \sum\limits_{i=1}^{n} iX(i) \\ \sum\limits_{i=1}^{n} i^2X(i) \end{pmatrix}$ <br><br> ,where $(\ )^{-1}$ represents an inverse matrix. |
| 3 | Polynomial approximation method <br><br> (Third-order polynomial) | $Y3(n+1)=A+B \times (n+1)+C \times (n+1)^2+D \times (n+1)^3$, <br> where A,B,C and D can be obtained as follows, <br><br> $\begin{pmatrix} A \\ B \\ C \\ D \end{pmatrix} = \begin{pmatrix} \sum\limits_{i=1}^{n} 1 & \sum\limits_{i=1}^{n} i & \sum\limits_{i=1}^{n} i^2 & \sum\limits_{i=1}^{n} i^3 \\ \sum\limits_{i=1}^{n} i & \sum\limits_{i=1}^{n} i^2 & \sum\limits_{i=1}^{n} i^3 & \sum\limits_{i=1}^{n} i^4 \\ \sum\limits_{i=1}^{n} i^2 & \sum\limits_{i=1}^{n} i^3 & \sum\limits_{i=1}^{n} i^4 & \sum\limits_{i=1}^{n} i^5 \\ \sum\limits_{i=1}^{n} i^3 & \sum\limits_{i=1}^{n} i^4 & \sum\limits_{i=1}^{n} i^5 & \sum\limits_{i=1}^{n} i^6 \end{pmatrix}^{-1} \begin{pmatrix} \sum\limits_{i=1}^{n} X(i) \\ \sum\limits_{i=1}^{n} iX(i) \\ \sum\limits_{i=1}^{n} i^2X(i) \\ \sum\limits_{i=1}^{n} i^3X(i) \end{pmatrix}$ <br><br> ,where $(\ )^{-1}$ represents an inverse matrix. |

NOTE:The current point is "n". X(i) is the optimum predicted solution at the repeat number "i", where "i" is taken from 1 to "n". Y1(n+1),Y2(n+1),..... are the predicted solution at the repeat number "n+1" by using each prediction method.

When all the prediction methods have been executed at step 15e, the processing at step 16 is executed. At step 16, an optimum solution is selected from the multiple predicted solutions obtained at step 15. This optimum solution is applied as a new initial value to be used at the next iterative repeat of the repeated calculation.

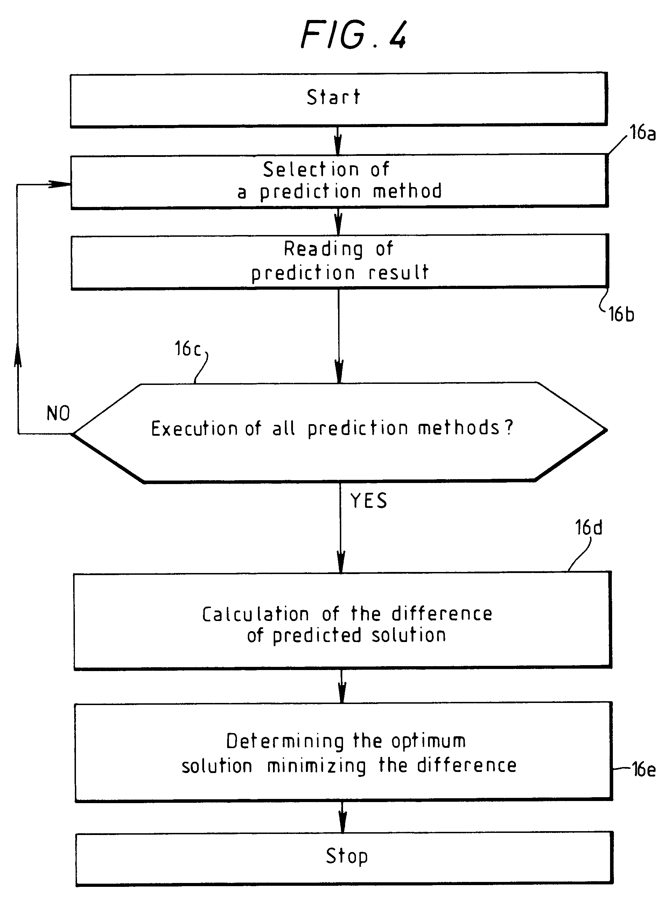

Fig. 4 illustrates now an optimum solution is obtained at step 16.

At step 16a, a prediction method is selected from multiple prediction methods stored in the memory 5. At step 16b, a predicted solution corresponding to a selected prediction method is read from multiple predicted solutions stored in the memory 5. At step 16c, it is determined whether or not the predicted solutions corresponding to all the prediction methods have been read from the memory 5. If step 16c judges "NO", processing of steps 16a to 16c is repeated. If step 16c judges "YES", processing of step 16d is executed. At steps 16d and 16e, an optimum solution is selected from the multiple predicted solutions selected at step 16b.

An example of a method to select an optimum solution is to select the predicted solution having the smallest change from the predicted solution of the previous interaction. This selection method is explained in detail below. Assuming that the number of previous repeats of the iteration of steps 13 to 17 at current point is n, the optimum predicted solution "X" at the repeat number "n" is $X(n)$. When there are "m" prediction methods, assume that the predicted solution obtained at the repeat number "n+1" using the first prediction method is $Y1(n+1)$, the predicted solution obtained at the repeat number "n+1" using the second prediction method is $Y2(n+1)$, ..... and the predicted solution obtained at the repeat number "n+1" using the mth prediction method is $Ym(n+1)$. The difference between each predicted solution and the optimum predicted solution $X(n)$ at the repeated calculations of the iteration can be calculated according to the formula mentioned below.

Formula 4

$$A1 = Y1(n+1) - X(n)$$

$$A2 = Y2(n+1) - X(n)$$

$$\vdots \qquad \vdots \qquad \qquad \vdots$$

$$\vdots \qquad \vdots \qquad \qquad \vdots$$

$$Am = Ym(n+1) - X(n)$$

where A1, A2, ... Am indicate the difference between each predicted solution and the optimum predicted solution of the previous iteration.

Steps 16d and 16e applying the above mentioned selection method are explained below. At step 16d, the difference between the multiple predicted solutions $Y1(n+1)$ and $Y2(n+1)$ obtained at step 15c and the optimum solution $X(n)$ is calculated according to Formula 4. At step 16e, the predicted solution causing the smallest difference in Formula 4 is selected as the optimum solution $Z(n+1)$. This optimum solution $Z(n+1)$ becomes the initial value for a calculation of iteration repeat $(n+1)$ and is used for the creation of matrix elements at step 13. For example, when A2 is minimum in Formula 4, the predicted solution $Y2(n+1)$ becomes the optimum solution $Z(n+1)$. This is thus expressed by Formula 5.

Formula 5

$$Z(n + 1) = Y2(n + 1)$$

The optimum solution $Z(n+1)$ determined at step 16e is stored in the memory 5 to be used as the initial value for the next repeated calculation. Thus the selected optimum solution $Z(n+1)$ replaces the optimum solution $X(n)$. The procedure for selecting an optimum solution mentioned above in detail is called optimum solution selection procedure.

Step 17 (Fig. 1) is implemented after termination of the step 16. At step 17 it is determined whether or not an optimum solution $Z(n+1)$ obtained at step 16 has converged sufficiently. If the optimum solution $Z(n+1)$ has not converged sufficiently (step 17 judges "NO"), the processing of steps 13 to 17 is repeated. When the optimum solution $Z(n+1)$ has converged sufficiently (step 17 judges "YES"), the processing of step 18 is executed. When the difference obtained by the Formula 4 for the predicted solution which is the optimum solution $Z(n+1)$ is below a specified value, this step judges that the optimum solution $Z(n+1)$ has converged sufficiently. The result of the judgment at step 17 is displayed by display 1 each time.

At step 18, the characteristics of a molecule having the molecular structure set at step 10, are evaluated using the electron orbit which is the converged optimum solution Z(n+1) and the electron energy obtained accordingly. Hence, the characteristics of the molecule are obtained by this evaluation. The obtained characteristics are output to the display 1 and displayed. The data necessary for evaluation at step 18 is called from the memory 5. Hence, the final optimum solution obtained after sufficient iterations have occurred to obtain convergence is used to obtain the appropriate features of the molecule.

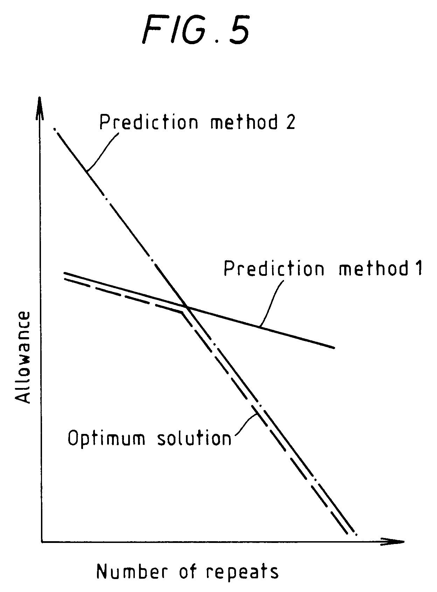

The effects of the first embodiment are shown in Fig. 5. Fig. 5 shows convergence of a predicted solution when using two prediction methods. The difference between the optimum solution X(n) and Z(n+1) of successive iterations is called the "allowance" and is shown on the vertical axis, and the repeat number is placed on the horizontal axis. The solid line represents the characteristic corresponding to a first prediction method (1) and the dot-and-dash line represents the characteristic corresponding to a second prediction method 2). In prediction method 1, convergence is slow although the allowance is small the repeat number is small. On the other hand, in prediction method 2, convergence is fast although the allowance is large at the stage where the repeat number is small. According to the first embodiment, as shown by the dashed line, a predicted solution having a small allowance (predicted solution having the smallest difference in the formula 4) is always selected as the optimum solution Z(n+1). Thus, compared with the conventional molecular design assistance apparatus equipped with a prediction method, the first embodiment is capable of reducing the number of the repeats of the repeated calculations required for molecular orbit analysis processing. The first embodiment is capable of reducing the number of repeats to 70 - 80% of conventional systems.

Conventionally, the processing time required for repeated calculations for a set molecular structure has occupied about 90% of the total processing time for that molecular structure. The first embodiment can reduce the total processing time required for a set molecular structure to 73% - 82% of that previously required. Meanwhile, in the first embodiment, the processing time required for repeated calculations occupies about 88% of the total processing time. Thus because the first embodiment can reduce the processing time required for repeated calculations, it is capable of solving nonlinear eigenvalue problems at a high speed and assisting in molecular design at a high speed.

As described previously, molecular design accompanied by molecular orbital analysis to calculate electron orbit energies and electron orbits by solving the Schroedinger equation arrives at a non-linear eigenvalue problem for solving a non-linear eigenvalue matrix. In molecular orbital analysis handling non-linear eigenvalues, it is difficult to determine the optimum prediction method for each problem (obtaining electron orbits and electron orbital energies of an arbitrary molecular structure). When solving a non-linear eigenvalue problem using multiple prediction methods, it might be thought possible to divide the total number of the repeats of the calculations for solving non-linear eigenvalue problems into multiple ranges, allocate a prediction method to each divided range and finally performing predictive calculations using an appropriate prediction method in the order of the divided time range. However, it is not clear how the total number of repeats should be divided into multiple time ranges for a non-linear eigenvalue problem, and further it is difficult to allocate an optimum prediction method to each divided time range. It is still more difficult to allocate a prediction method to such a divided time range about multiple non-linear eigenvalue problems.

In contrast, the first embodiment of the present invention gives a high accuracy of the final solution, because this embodiment includes multiple prediction methods and predicts the solution of the basic equation using an appropriate prediction method at each repeated calculation and then selects an optimum solution from the multiple solutions predicted by each method. In this embodiment, a prediction method is not allocated to each divided time range which is obtained by dividing the total repeat times to multiple ranges, but individual prediction methods are utilized in total repeated calculations until a converged optimum solution is obtained. The number of calculations by prediction method 1 and 2, which are different from each other, are the same as the processing number at step 14, that is, the number of the operations to solve the non-linear eigenvalue problem.

Thus, steps 15 and 16 of this embodiment can be said to be a means for reducing the number of the repeats.

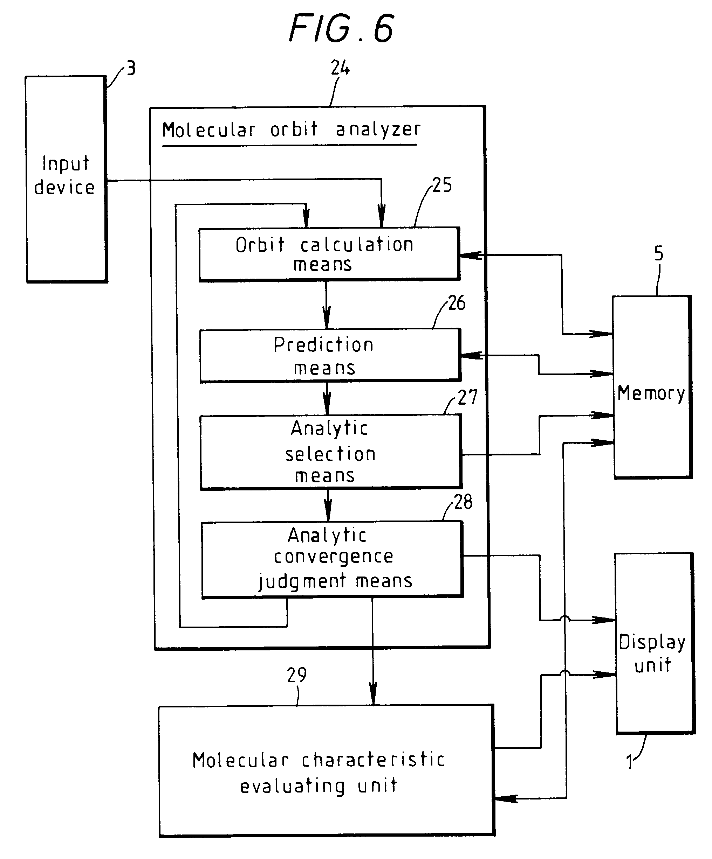

Fig. 6 illustrates the molecular design assistance apparatus shown in Fig. 2, for executing the procedure of the processing expressed in Fig. 1, from the functional viewpoint.

The molecular design assistance apparatus shown in Fig. 2 for executing the procedure of the processing of Fig. 1 comprises the display unit 1, the input device 3, the memory unit 5, a molecular orbit analysis unit 24 and a molecular characteristic evaluation unit 29. The molecular orbit analysis unit 24 includes orbit calculation means 25, prediction means 26, analytic selection means 27 and analytic convergence judgment means 28. The orbit calculation means 25 executes the processing of steps 12 to 14 expressed in Fig. 1. The prediction means 26 corresponds to step 15, the analytic selection means 27, to step 16, and the analytic convergence judgment means 28, to step 17. The molecular characteristic evaluation means corresponds to step 18.

The procedure of the processing at step 15 in the first embodiment can be achieved as follows. The procedure of the processing expressed in Fig. 3 is an example for executing a prediction using all the prediction methods stored in the memory 5, where multiple prediction methods suitable for a given molecular structure are selected from the memory 5 and a prediction is carried out according to the method illustrated in Fig. 3. At step 15a, multiple appropriate prediction means corresponding to a molecular structure set at step 10 may be selected. This selection is done on the basis of the above mentioned molecular structure type or substance.

For example, multiple appropriate prediction methods may be selected depending on whether or not a benzene nucleus exists. Next, one prediction method is chosen from the selected prediction methods at step 15f (not shown). The processing of steps 15b to 15e is performed using this chosen prediction method. Then, it is determined whether or not all the prediction methods selected at step 15a have been executed, is at step 15e. If the result of the judgment is "NO", another (remaining) prediction method chosen from the prediction methods selected at step 15a and the processing of steps 15b to 15e is executed to this selected prediction method. When the judgment of step 15e reveals "YES", the processing of step 16 is like Fig. 3.

When the processing of step 15 is executed in this way, as for step 16, the content of the processing of steps 16a and 16c is slightly different from the first embodiment at step 16a, a prediction method is selected from multiple appropriate prediction methods corresponding to the molecular structure, selected at step 15a. Furthermore, it is determined whether or not execution of all the prediction methods selected at step 15a have been executed at step 16c. When the result of this judgment is "NO", the processing of steps 16a is executed. At the remaining steps of step 16, the same processing as the first embodiment is executed.

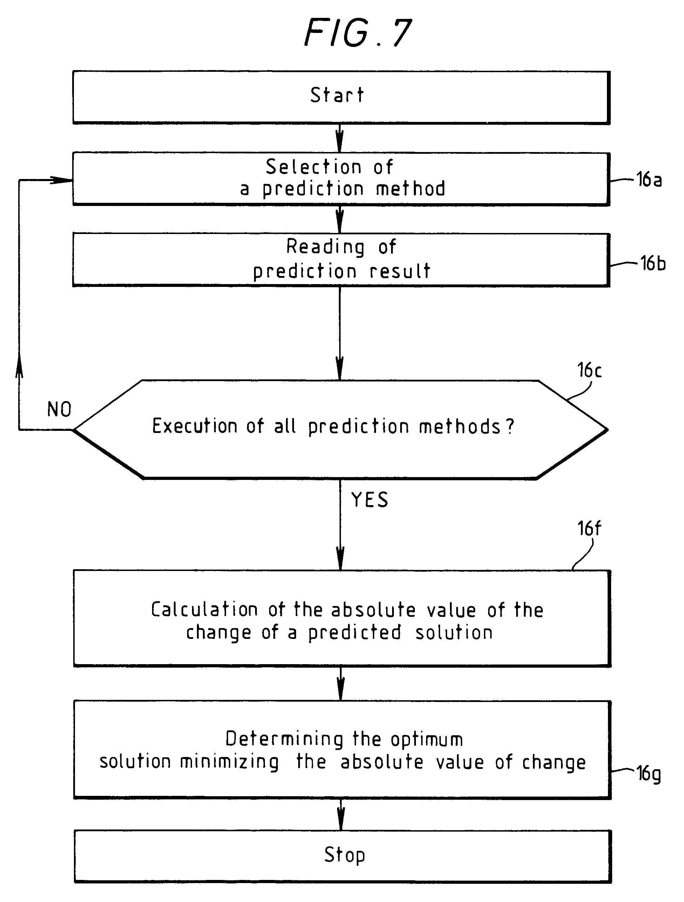

A molecular design assistance apparatus which is another embodiment of this invention (the second embodiment) will now be explained. The second embodiment has the configuration shown in Fig. 2 and executes the processing indicated in Fig. 1. However, the second embodiment substitutes the procedure of the processing shown in Fig. 7 for that in Fig. 4 to achieve the processing required by step 16 in Fig 1. Thus, the second embodiment differs from the first embodiment, only in the contents of at step 16 (as carried out by the analytic selection means 27). Although the first embodiment selects the optimum a solution giving the smallest difference between the predicted solution and the optimum solution, the second embodiment selects the optimum solution by utilizing the absolute value of such a difference. The processing at step 16 in the second embodiment will be explained with reference to Fig. 7. Because the processing of the other steps are the same as the first embodiment, the explanation of them is omitted.

Assuming that the number of previous repeats of the iteration is "n", the optimum predicted solution at iteration repeat "n" is $X(n)$. When there are "m" prediction methods assume that the predicted solution obtained at iteration repeat "n+1" using the first prediction method is $Y1(n+1)$, the predicted solution obtained at iteration repeat "n+1" using the second prediction method is $Y2(n+1)$, the predicted solution obtained at the iteration repeat "n+1 " using the "m"th prediction method is $Ym(n+1)$. The absolute value of the difference between each predicted solution and the optimum predicted solution $X(n)$ can be calculated according to Formula 6 mentioned below.

$$\text{Formula } 6$$

$$B1 = |Y1(n+1) - X(n)|$$

$$B2 = |Y1(n+1) - X(n)|$$

$$\vdots \qquad \vdots \qquad \vdots$$

$$\vdots \qquad \vdots \qquad \vdots$$

$$Bm = |Ym(n+1) - X(n)|$$

Where $|\ |$ is the modulus symbol for an absolute value and B1, B2 ... Bm are the absolute values of the differences between each predicted solution and the optimum predicted solution of the previous interaction, for each prediction method, representing the change of the predicted solution.

Within step 16 shown in Fig. 7, steps 16a to 16c are the same as the corresponding steps in Fig. 4 and steps 16f and 16g are different. These steps apply the selection method discussed above, and these steps 16f and 16g will now be explained.

At step 16f, the absolute value of a difference between the multiple predicted solutions $Y1(n+1)$ and $Y2(n+1)$ obtained at step 15c and the optimum solution $X(n)$ of the previous iteration is calculated according to Formula 6. The predicted solution $Y1(n+1)$ is a solution obtained according to a first prediction method and the predicted solution $Y2(n+1)$ is a solution obtained by prediction method.

At step 16g, a predicted solution with the smallest absolute value in Formula 6 is selected as the optimum solution Z(n+1). This optimum solution Z(n+1) becomes the initial (optimum) value for the calculation of the (n+1)th iteration and is used for the creation of matrix elements at step 13. For example, if B2 is minimum in the Formula 6, the predicted solution Y2 (n+1) becomes the optimum solution Z(n+1). This is then expressed by Formula 7.

Formula 7

$$Z(n + 1) = Y2(n + 1)$$

The optimum solution Z(n+1) decided at step 16g is stored in the memory 5 to be used as the initial (optimum) value for the next repeat calculation of the iteration.

The second embodiment can produce the same effect as the first embodiment Because the second embodiment uses the absolute value of the change of a predicted solution as the criterion for selection of an optimum solution, an appropriate optimum solution can be selected even when the sign of the predicted solution reverses.

Also, because, the second embodiment uses this optimum solution as an initial value on repeated calculations until another optimum solution converges, the predicted solution to be obtained in repeated calculation becomes appropriate. As a result, the second embodiment can obtain a convergent solution (convergent optimum solution) with a smaller number of iteration repeats than the first embodiment.

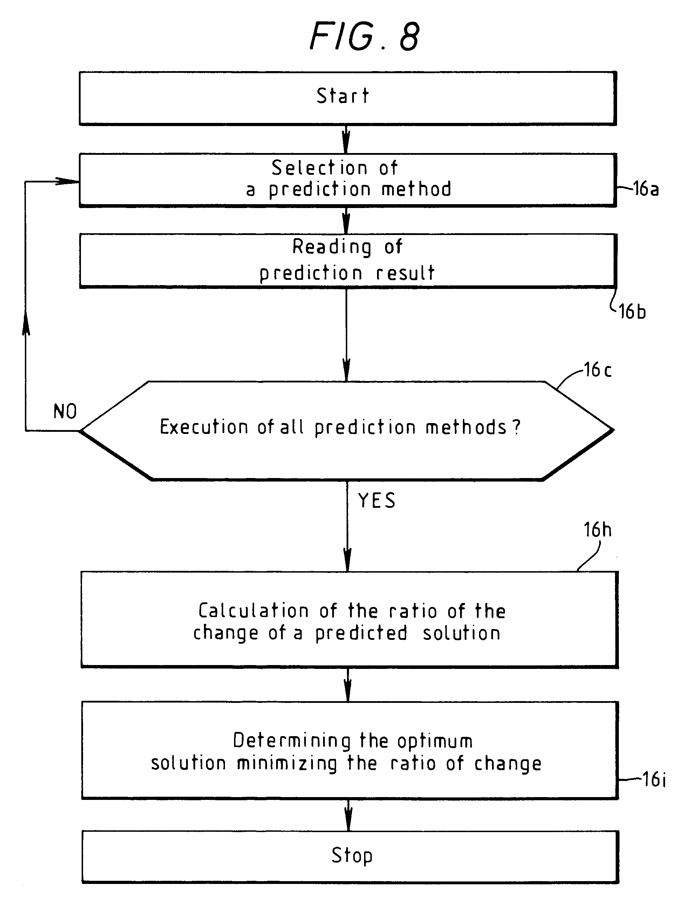

A molecular design assistance apparatus which is a third embodiment will now be explained. The third embodiment has the configuration shown in Fig. 2 and executes the procedure of the processing shown in Fig. 1. However, the third embodiment substitutes the processing shown in Fig. 8 for that of Fig.4 to achieve the processing of step 16 in Fig. 1. Thus, the third embodiment is different from the first embodiment only in the content of step 16 ( as carried out by the analytic selection mean 27). Although the first embodiment selects the optimum solution giving the smallest difference between the predicted solution and the optimum solution of the previous iteration, the third embodiment selects the optimum solution by using the ratio between these solutions.

The processing at step 16 in the third embodiment will be explained in detail with reference to Fig. 8. Because the processings of the other steps are the same as the first embodiment, explanation of them is omitted.

The ratios between predicted solutions Y1(n+1), Y2(n+1), ..., Ym(n+1) each and optimum solution X(n) for the previous iteration can be calculated according to Formula 8 below.

Formula 8

$$C1 = |Y1(n+1) - X(n)|/X(n)$$

$$C2 = |Y2(n+1) - X(n)|/X(n)$$

$$\vdots \qquad \qquad \vdots \qquad \qquad \vdots$$

$$\vdots \qquad \qquad \vdots \qquad \qquad \vdots$$

$$Cm = |Ym(n+1) - X(n)|/X(n)$$

where | | is the modulus symbol of absolute value, C1, C2, ..., Cm are the ratios between the absolute value of the difference between a predicted solution and optimum solution and the optimum solution for each prediction method, representing the change of the predicted solution.

Step 16 in Fig 8 is the same as the processing shown in Fig. 4 for steps 16a - 16c, and different in steps 16h and 16 are different. Steps 16h and 16i are explained below. At step 16h, the absolute value of the difference between the predicted solutions Y1(n+1) and Y2(n+1), and the optimum solution X(n) of the previous iteration, obtained at step 15c is calculated using Formula 8. The ratio between this absolute value and the optimum solution X(n) is calculated. At step 16g, the predicted solution that minimizes the ratio in the Formula 8 is selected as the optimum solution Z(n+1). This optimum solution Z (n+1) becomes the initial value for the calculation of the (n+1)th iteration and is used for creation of matrix elements at step 13. For example, when C2 is minimum in the formula 8, the predicted solution Y2(n+1) becomes the optimum solution Z(n+1). This can be expressed by Formula 9.

Formula 9

$$Z(n + 1) = Y2(n + 1)$$

Because the optimum solution Z(n+1) decided at step 16g is utilized as the initial value of the next repeated calculation, this is stored in memory 5.

The third embodiment can produce the same effect as the first embodiment. Because the third embodiment uses the ratio between the predicted solution and the optimum solution as the criterion for selection of an optimum solution, the differential coefficient of the change of the predicted solution is employed as the criterion for selection of an optimum solution. Hence, the change of predicted solutions among repeated calculations is minimal, so that a suitable optimum solution can be selected even if all the differences between predicted solutions are small.

It is evident that using a recording medium such as a floppy disk, storing the individual processing procedures mentioned about the first, second, and third embodiments will permit molecular design assistance using an arbitrary computer housing the configuration shown in Fig. 2.

Any of the first, second and third embodiments provides a design assistance method and apparatus capable of high speed processing to reduce the number of repeated calculations for solving a non-linear eigenvalue problem. The concept of these embodiments is applicable to other design assistant apparatus used for solving non-linear eigenvalue problems. An example of this is a fluid system design assistance apparatus.

A fluid system design assistance apparatus which is a further embodiment the fourth embodiment) of this invention has the configuration shown in Fig. 2. The processing executed in the arithmetic operation unit 2 of the fourth embodiment is stored in the processing procedure memory 2a. The processing procedure is almost the same as in Figs. 1, 3 and 4 and different only in the steps 10, 12, 14 and 18. The processing of the fourth embodiment including these different steps is explained below. This embodiment is based on the processing procedure shown in Fig. 4, but the processing procedure of Fig. 7 or 8 can be utilized.

At step 10, the three dimensional configuration data of a fluid system which is a design object is input as a design condition. The input of this three dimensional data is done by an operator inputting data through the input device 3. If the three dimensional data of various fluid systems is already stored in memory 5, the three dimensional data of an appropriate fluid system is read out from memory 5 and set by the operator entering the name (or code name) of an appropriate fluid system.

Next, structural analysis of the fluid system which is the design object is executed at step 11. The Navier-Stokes equation may be used in structural analysis for fluid system design. The Navier-Stokes equation is stored in the memory 5. Step 11 includes steps 12 to 17. An initial value necessary for solving the Navier-Stokes equation (initial values of free energy and pressure) is input at step 12. Input of this initial value is done by the operator entering data through the input device 2. At step 13, an eigenvalue matrix based on the Navier-Stokes equation is created for the fluid system which is a design object.

An eigenvalue matrix based on the Navier-Stokes equation may be created by the method described in "Numeric Simulation in Engineering" (published by Maruzen). By solving an eigenvalue matrix created at step 13, "pressure", which is eigenvector, and "free energy", which is eigenvalue, are obtained (step 14). The eigenvector and eigenvalue are a simple solution. This simple solution is stored in memory 5. The processing at steps 15 to 17 of the fourth embodiment is the same as that of the first embodiment. In the fourth embodiment, the processing of steps 13 to 17 is repeated until the result of step 17 is "YES". Then, the characteristic of the fluid system which corresponds to the convergent optimum solution Z (n + 1) is evaluated (step 18). Any data necessary for this is retrieved from the memory 5. In the fourth embodiment also, the number of repeated calculations is reduced significantly, as for the first embodiment, so that the same effect as the first embodiment may be obtained.

This invention can be applied to any design assistance apparatus capable of handling a basic equation as a non-linear eigenvalue problem regardless of the type of basic equations to be solved. Design assistance apparatus that may be based on this invention include: a molecular design assistance apparatus using the Schroedinger equation, a fluid system design assistance apparatus using the Navier-Stokes equation, a machine design assistance apparatus using the equation of motion, and a magnetic machine design apparatus using the Maxwell's equation for magnetic field analysis.

Embodiments relating to a machine design assistance apparatus and to a magnetic machine design apparatus will now be discussed. These design assistance apparatus have the same configuration as that shown in Fig. 2. The processing procedure to be executed by the arithmetic operation processing unit 2 of this embodiment is stored in the processing procedure memory 2. The processing procedure is almost the same as those of Figs. 1, 3 and 4 differs only in steps 10, 12, 14 and 18. Instead of the processing procedure shown in Fig. 4, the processing procedures of Figs. 7 and 8 can be used.

Step 10 is the same as step 10 of the fourth embodiment (fluid system design assistance apparatus). Data to be input to this process is three dimensional data for the machine and device which are the design object. Next, step 12 for machine design, an initial value necessary for solving the equation of motion is input. At step 12, for magnetic machine design, the initial value for solving Maxwell's equation is set. Step 13 creates an eigenvalue matrix for the machine which is the design object. At step 13, machine design assistance apparatus creates, an eigenvalue matrix based on the equation of motion according to, for example, the method mentioned in "Numeric Simulation in Engineering" (published by Maruzen). At step 13, a magnetic machine design assistance apparatus creates, an eigenvalue matrix based on Maxwell's equation according to, for example, the method mentioned in "Numeric Simulation in Engineering" (published by Maruzen). At step 14, an eigenvalue or eigenvector is obtained by solving a created eigenvalue matrix. In this case, the obtained eigenvalue and eigenvector are a simple solution. This simple solution is stored in memory 5. The processings of steps 15 to 17 of those assistance apparatus are the same as those of the first embodiment. Also in case of the machine design assistance apparatus and magnetic machine design assistance apparatus, the processing of steps 13 to 17 is repeated until the result of step 17 is "YES". Then, the characteristic of a machine which has obtained a convergent optimum solution $Z(n+1)$ is evaluated (step 18).In the embodiments of these machine design assistance apparatus and magnetic machine design assistance apparatus, the same advantages as the first embodiment may be obtained.

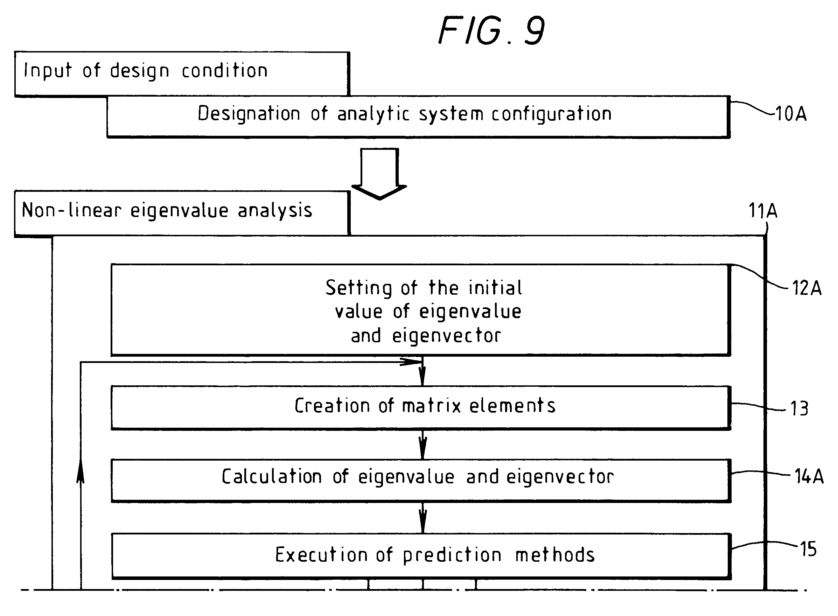

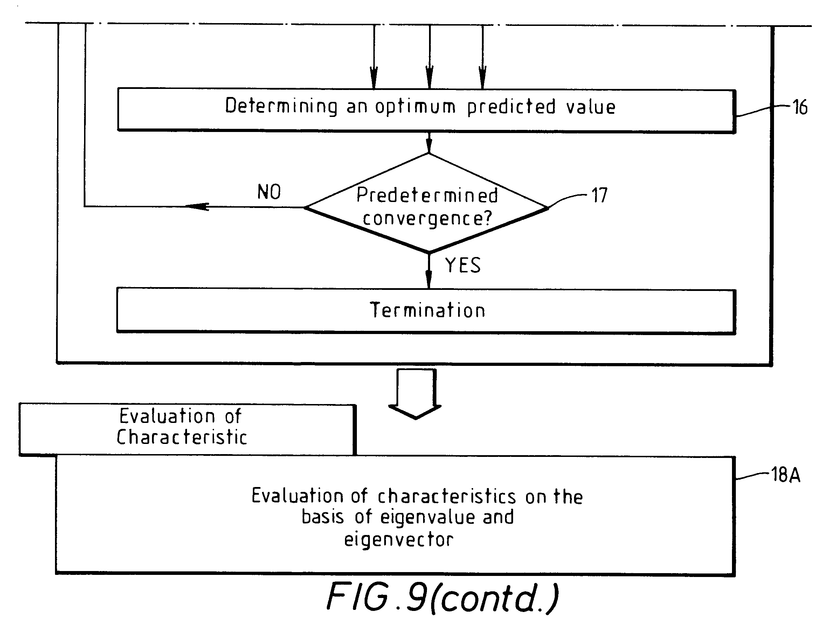

A design assistance apparatus which is a further embodiment of this invention (the fifth embodiment) will now be explained. The fifth embodiment has the configuration shown in Fig. 2 and executes the processing shown in Fig. 9. The fifth embodiment represents the concept common to the embodiments of the molecular design assistance apparatus, fluid system design apparatus, machine design assistance apparatus, and magnetic machine design apparatus discussed above.

In this fifth embodiment step 10A corresponds to the input of a design condition related to an object design. This condition is input by an operator by e.g. entering a design condition via the input device 3. For the molecular design assistance apparatus, a molecular structure is set as a design condition. In a design assistance apparatus which assists in design by solving a non-linear eigenvalue problem, such as fluid system design assistance apparatus, machine design assistance apparatus, and magnetic machine design assistance apparatus, the three dimensional configuration of the machine which is a design object is input as a design condition. At step 12A, an initial value of the eigenvalue or eigenvector is input. Again, this input is by the operator enterring the initial value through the input device 3. The eigenvalue and eigenvector to be used for a molecular design assistance apparatus and fluid system design assistance apparatus are the same as those mentioned before. In a machine design assistance apparatus, the eigenvalue is "kinetic energy" and the eigenvector is "speed". In a magnetic machine design assistance apparatus, the eigenvalue is "potential energy" and the eigenvector is "electric field". These eigenvalues and eigenvectors are examples. Step 12 creates an eigenvalue matrix to be solved as discussed above. The eigenvalue matrix to be created depends on the basic equation to be processed by the design assistance apparatus. At step 14A, the eigenvalue matrix thus created is solved so as to obtain the eigenvalue and eigenvector. The eigenvalue and eigenvector thus obtained are a simple solution. The processings of steps 15 to 17 are executed in the same procedure as the first embodiment. On the basis of detection of a converged optimum solution, corresponding to "YES" at step 17, the characteristic of the object subject to analysis, defined by the design condition input at step 10A is evaluated at step 18A.

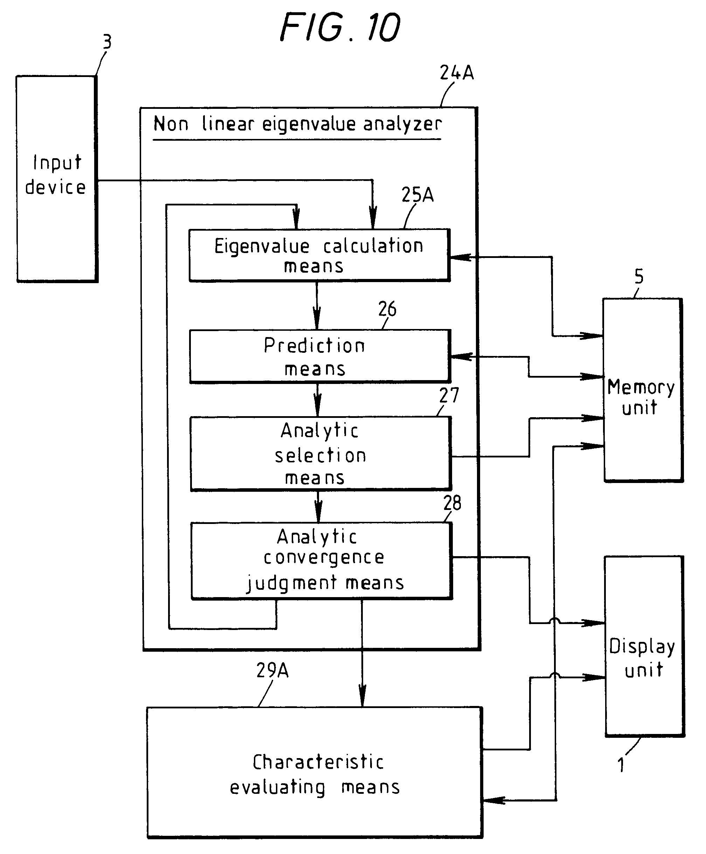

Fig. 10 shows the processing procedure of Fig. 9 from the functional viewpoint. The design assistance apparatus for executing the processing procedure shown in Fig. 9 comprises a display 1, input device 3, non-linear eigenvalue analyzer 24A and characteristic evaluating unit 29. In Fig. 10, parts having the corresponding function to those in Fig 6 are indicated by the same reference numerals. The calculation means 25A for the eigenvalue and eigenvector corresponds to steps 12A, 13 and 14A in Fig. 9. The characteristic evaluating unit 29A corresponds to step 29A shown in Fig. 9.

The characteristic to be obtained by processing at step 18 or 18A of each embodiment mentioned before is a characteristic corresponding to the specific design object, e.g. chemical characteristic, optical characteristic, mechanical characteristic, electrical characteristic, structural characteristic or fluid characteristic.

A design assistance apparatus which is a sixth embodiment of this invention will now be explained. The sixth embodiment has the configuration shown in Fig. 2 and executes the processing procedure shown in Fig. 9. However, the sixth embodiment has the functions of a molecular design assistance apparatus, fluid system design assistance apparatus, machine design assistance apparatus and magnetic machine design assistance apparatus. The memory 5 of this embodiment stores the data necessary for executing the function of each design assistance apparatus and the basic equation. This basic equation includes the above mentioned Schroedinger equation, Navier-Stokes equation, equation of motion and Maxwellian equation. Before entering the required data to step 10A, an operator designates the design to be implemented (molecular design, fluid system design , machine design or magnetic machine design) through the input device 3.

Meanwhile, at steps 10A and 12A, data associated with a designated design is set. At step 13, matrix elements based on the basic equation required for a designated design are created. The sixth embodiment produces the same effect as the first embodiment. Further, the sixth embodiment is capable of assisting in an arbitrary designated design. Although the sixth embodiment is capable of assisting in at least four kinds of design, it can make use of two or three types of those designs as an executable design assistance apparatus.

This invention is applicable for control, for example, in other fields than design assistance, such as control of an industrial plant. The present invention can be applied to a non-linear optimizing apparatus for optimizing a non-linear problem. An embodiment corresponding to this case is explained according to Figs. 9 and 10. This embodiment has the configuration shown in Fig. 2 and executes the processing procedure mentioned below. At step 10A, information about the particular non-linear problem (information of the object whose non-linear problem is to be solved) of an object is input. At step 12, its initial value is set and at step 14, and the non-linear problem is solved. The processing of step 13 may not be necessary depending on the case. Then, steps 15 to 17 are executed and finally, an optimum solution to the non-linear problem is obtained.

According to the present invention, the number of repeats of iteration calculation may be reduced so as to speed up the processing of non-linear problems.

## Claims

1. A method of obtaining a final solution to a non-linear problem, comprising iteratively and repeatedly carrying out the steps of:
   a) associating a prediction result with said nonlinear problem;
   b) applying a plurality of prediction methods to said non-linear problem, on the basis of said prediction result, to obtain a plurality of parallel predicted solutions;
   c) selecting an optimum one of said parallel predicted solutions;
   d) deriving a further prediction result of said nonlinear problem corresponding to said selected optimum one of said parallel predicted solutions; and
   e) replacing said prediction result with said further prediction result;     wherein said steps (a) to (e) are iteratively repeated until a predetermined convergence of said prediction result and said further prediction result is obtained, said final solution then corresponding to said further prediction result.

2. A method of obtaining a final solution to a nonlinear problem, comprising iteratively and repeatedly carrying out the steps of:
   a) associating a prediction result with said nonlinear problem;
   b) applying a plurality of prediction methods to said non-linear problem, on the basis of said prediction result, to obtain a plurality of parallel predicted solutions;
   c) selecting an optimum one of said parallel predicted solutions;
   d) deriving a further prediction result of said nonlinear problem corresponding to said selected optimum one of said parallel predicted solutions; and
   e) replacing said prediction result with said prediction result;     wherein said steps (a) to (e) are iteratively repeated until a predetermined convergence of said prediction result and said further prediction result is obtained, said final solution then corresponding to said prediction result.

3. A method according to claim 1 or claim 2, wherein said multiplicity of solutions are applied in parallel.

4. A method according to any one of claims 1 to 3, wherein said optimum one of said parallel predicted solutions is obtained by deriving a plurality of predicted results corresponding to said plurality of parallel predicted solutions, and comparing each of said parallel predicted solutions with said prediction result.

5. A method according to claim 4, wherein said comparing of each of said parallel predicted solutions with said prediction result involves deriving differences between each of said parallel predicted solutions and said prediction result, and comparing said differences.

6. A method according to claim 4, wherein said comparing of each of said parallel predicted solutions with said prediction result involves deriving the absolute values of the differences between each of said parallel predicted solutions and said prediction result, and comparing said absolute values.

7. A method according to claim 4, wherein said comparing of each of said parallel predicted solutions with said prediction result involves deriving the ratios of said prediction result and the differences between each of said rarallel predicted solution and said prediction result, and comparing said ratios.

8. A method according to any one of the preceding claims, further including storing a multiplicity of prediction methods and selecting at least some of said multiplicity of prediction methods as said plurality of prediction methods.

9. A method according to claim 8, wherein said selecting of at least some of said multiplicity of prediction methods is determined by said non-linear problem.

10. A method of analysis of a property of a material, in which a non-linear problem corresponds to an orbital analysis of said material, said method comprising obtaining a final solution to the nonlinear problem by a method according to any one of the preceding claims, whereby said property corresponds to said final solution.

11. A design method for investigating an object, comprising:
modifying said object in a predetermined way to obtain a modified object; and
deriving a property of said modified object, said property corresponding to the solution of a non-linear problem;
wherein a final solution to said non-linear problem is obtained by a method according to any one of Claims 1 to 9, whereby said property corresponds to said final solution.

12. A method of analysis of a property of a fluid, in which a non-linear problem corresponds to a fluid dynamics problem of said fluid, said method comprising obtaining a final solution to the non-linear problem by a method according to any one of Claims 1 to 9, whereby said property of said fluid corresponds to said final solution.

13. A method of analysing an electromagnetic field, for which there is an electromagnetic field calculation involving a non-linear problem, comprising obtaining a final solution to said non-linear problem by a method according to any one of Claims 1 to 9, whereby said final solution is a solution of said electromagnetic field calculation.

## FIG.1

Input of molecular structure

Designation of molecular coordinates and element type ────10

Molecular orbital analysis ────11

Input of initial values of
electron orbit and
electron orbit energy ────12

Creation of matrix elements ────13

Calculation of electron orbit and orbit energy ────14

Execution of prediction methods ────15

EP 0 505 087 A2

FIG.1(contd.)

EP 0 505 087 A2

# FIG. 2

Display unit — 1

Data output section — 2d

Arithmetic operation unit — 2

Input device — 3

Processing procedure memory section

Arithmetic operation section — 2b / 2a

Intermediate data memory

Data input section — 2e

Memory — 5

2c

# FIG. 3

```
┌─────────────────────────────────────┐
│               Start                  │
└─────────────────────────────────────┘
                  │
                  ▼
┌─────────────────────────────────────┐
│        Selection of a               │
│        prediction method            │──── 15a
└─────────────────────────────────────┘
                  │
                  ▼
┌─────────────────────────────────────┐
│        Input of a previous          │
│        predicted solution           │──── 15b
└─────────────────────────────────────┘
                  │
                  ▼
┌─────────────────────────────────────┐
│        Execution of a               │
│        prediction method            │──── 15c
└─────────────────────────────────────┘
                  │
                  ▼
┌─────────────────────────────────────┐
│        Storage of                   │
│        prediction result            │──── 15d
└─────────────────────────────────────┘
                  │
                  ▼
        ╱─────────────────────╲
   NO  ╱      Execution of      ╲      15e
◄─────╱      all prediction      ╲
       ╲        methods?        ╱
        ╲─────────────────────╱
                  │
                 YES
                  │
                  ▼
┌─────────────────────────────────────┐
│               Stop                   │
└─────────────────────────────────────┘
```

# FIG.4

```
┌─────────────────────────────────────────────┐
│                    Start                      │
└─────────────────────────────────────────────┘
                      ↓
┌─────────────────────────────────────────────┐   16a
│                Selection of                   │
│             a prediction method               │
└─────────────────────────────────────────────┘
                      ↓
┌─────────────────────────────────────────────┐
│                 Reading of                    │
│              prediction result                │
└─────────────────────────────────────────────┘   16b
                      ↓
         16c
      ╱────────────────────────────────────────╲
 NO  ╱                                           ╲
╱────┤      Execution of all prediction methods? ├
     ╲                                           ╱
      ╲────────────────────────────────────────╱
                      │ YES
                      ↓                          16d
┌─────────────────────────────────────────────┐
│            Calculation of the difference      │
│              of predicted solution            │
└─────────────────────────────────────────────┘
                      ↓
┌─────────────────────────────────────────────┐
│            Determining the optimum            │
│        solution  minimizing the difference    │   16e
└─────────────────────────────────────────────┘
                      ↓
┌─────────────────────────────────────────────┐
│                    Stop                       │
└─────────────────────────────────────────────┘
```

# *FIG.5*

Prediction method 2

Prediction method 1

Allowance

Optimum solution

Number of repeats

# FIG.6

# FIG.7

Start

Selection of
a prediction method — 16a

Reading of
prediction result — 16b

NO

Execution of all prediction methods? — 16c

YES

Calculation of the absolute value of the
change of a predicted solution — 16f

Determining the optimum
solution minimizing the absolute value of change — 16g

Stop

# FIG. 8

```
┌─────────────────────────────────────────────┐
│                    Start                      │
└─────────────────────────────────────────────┘
                      │
                      ▼
┌─────────────────────────────────────────────┐
│               Selection of                    │
│            a prediction method                │ ─── 16a
└─────────────────────────────────────────────┘
                      │
                      ▼
┌─────────────────────────────────────────────┐
│               Reading of                      │
│            prediction result                  │
└─────────────────────────────────────────────┘
                                          └── 16b
                      │
                      ▼
                                           ── 16c
        ╱─────────────────────────────────╲
  NO   ╱  Execution of all prediction methods? ╲
 ◄─────╲                                     ╱
        ╲─────────────────────────────────╱
                      │ YES
                      ▼
                                          16h
┌─────────────────────────────────────────────┐
│        Calculation of the ratio of the        │
│         change of a predicted solution        │
└─────────────────────────────────────────────┘
                      │
                      ▼
┌─────────────────────────────────────────────┐
│           Determining the optimum             │
│    solution minimizing the ratio of change    │ ─── 16i
└─────────────────────────────────────────────┘
                      │
                      ▼
┌─────────────────────────────────────────────┐
│                    Stop                       │
└─────────────────────────────────────────────┘
```

## FIG. 9

Input of design condition

Designation of analytic system configuration ~10A

Non-linear eigenvalue analysis 11A

Setting of the initial value of eigenvalue and eigenvector ~12A

Creation of matrix elements ~13

Calculation of eigenvalue and eigenvector ~14A

Execution of prediction methods ~15

EP 0 505 087 A2

Determining an optimum predicted value — 16

Predetermined convergence? — 17

NO

YES

Termination

Evaluation of Characteristic

Evaluation of characteristics on the basis of eigenvalue and eigenvector — 18A

*FIG.9(contd.)*

# FIG. 10